# EUROPÄISCHE PATENTSCHRIFT

(11) **EP 3 703 997 B1**
(45) Veröffentlichungstag und Bekanntmachung des Hinweises auf die Patenterteilung: **26.03.2025**
(21) Anmeldenummer: 18795485.4
(22) Anmeldetag: 25.10.2018
(51) Int. Cl.: B62D 15/02, G08G 1/0962

(54) **PARKASSISTENZ FÜR EIN KRAFTFAHRZEUG ZUM PARKEN AUF ÖFFENTLICHEM UND PRIVATEM GRUND**
PARKING ASSISTANCE FOR A MOTOR VEHICLE FOR PARKING ON PUBLIC AND PRIVATE LAND
AIDE AU STATIONNEMENT D'UN VÉHICULE AUTOMOBILE PERMETTANT DE STATIONNER SUR UN TERRAIN PUBLIC ET PRIVÉ

(30) Priorität: 03.11.2017 DE 102017125710
(43) Veröffentlichungstag der Anmeldung: 09.09.2020
(73) Patentinhaber: Valeo Schalter und Sensoren GmbH, 74321 Bietigheim-Bissingen (DE)
(72) Erfinder: TZEMPETZIS, Dimitrios, 74321 Bietigheim-Bissingen (DE); HEIMBERGER, Markus, 74321 Bietigheim-Bissingen (DE); PRINZHAUSEN, Stefanie, 74321 Bietigheim-Bissingen (DE)
(74) Vertreter: Pothmann, Karsten
(86) Internationale Anmeldenummer: PCT/EP2018/079229
(87) Internationale Veröffentlichungsnummer: WO 2019/086315

(56) Entgegenhaltungen:
- EP-A1- 3 217 244
- DE-A1- 102010 023 162
- DE-A1- 102012 112 802
- DE-A1- 102013 015 348
- DE-A1- 102016 211 179

## Beschreibung

Die Erfindung betrifft ein Verfahren zum Betreiben einer Parkassistenzeinrichtung eines Kraftfahrzeugs. Die Erfindung betrifft auch eine Parkassistenzeinrichtung für ein Kraftfahrzeug, mit einer Recheneinheit zum Erlernen einer Parktrajektorie zwischen einer Ausgangsposition und einer Parkposition des Kraftfahrzeugs bei einem von einem Fahrer des Kraftfahrzeugs geführten Parken.

Es existiert bereits eine Vielzahl von Parkassistenzeinrichtungen zum Unterstützen, das heißt teil- oder vollautomatisiertem Durchführen eines Parkens von Kraftfahrzeugen. Es existieren auch Parkassistenzeinrichtungen, welche für das Kraftfahrzeug eine bei einem Parkvorgang befahrene Trajektorie abspeichern und diese für ein späteres teil- oder vollautomatisches Parken nutzen. Dabei werden typischerweise bei dem Erlernen der jeweiligen Parktrajektorie unterschiedliche Sensorinformationen von Sensoreinheiten des Kraftfahrzeugs genutzt, um eine Information über die Umgebung zu erhalten, beispielsweise in Form sogenannter Landmarken, und sich entsprechend an dieser Information, beispielsweise den Landmarken, zu orientieren.

Anhand der Umgebungsinformationen, beispielsweise den Landmarken, kann also bei einem nachfolgenden automatisierten Abfahren der Parktrajektorie eine augenblickliche Position des Kraftfahrzeugs relativ zu der abgespeicherten oder erlernten Parktrajektorie ermittelt werden und so entschieden werden, wie das Kraftfahrzeug gesteuert werden muss, damit es der Parktrajektorie folgt und schließlich eine gewünschte Parkposition erreicht. Dabei kann ein entsprechend vorhandenes Hindernis auf der abgespeicherten Trajektorie zu einem Abbruch oder einer Pause des Verfahrens führen. Überdies kann die Trajektorie auch angepasst werden, sodass das Kraftfahrzeug um das Hindernis herum fährt. Umgekehrt kann dabei die erlernte Parktrajektorie auch von der Parkposition zurück zu der Ausgangsposition, an welcher das von der Parkassistenzeinrichtung unterstützte Parken begonnen hat, durchgeführt werden.

Insgesamt kann somit also erreicht werden, dass ein Fahrer beispielsweise aus dem Kraftfahrzeug aussteigt, dieses selbstständig entlang einer zuvor erlernten Parktrajektorie einen Parkplatz, beispielsweise auf einem Privatgrund des Fahrers, einnimmt und bei Bedarf rückwärts entlang der trainierten Parktrajektorie wieder zur Ausgangsposition ausparkt, in welcher sodann der Fahrer wieder einsteigen kann. Dabei kann die erlernte Parktrajektorie zwischen der Ausgangsposition und der Parkposition auch eine gleichwertige Ersatztrajektorie umfassen, welche bereichsweise von der ursprünglichen Parktrajektorie von der Ausgangsposition zu der Parkposition abweicht, beispielsweise um in Form eines Rangiermanövers eine Ausrichtung des Kraftfahrzeugs auf der Parktrajektorie zu ändern, sodass das Kraftfahrzeug dann nach dem teil- oder vollautomatisierten Ausparken in im Vergleich zu bei dem Einparken entgegengesetzter Ausrichtung die Ausgangsposition oder eine andere Position auf der ursprünglichen Parktrajektorie erreicht.

Beispielsweise ist in diesem Zusammenhang aus der DE 10 2008 027 692 A1 ein Verfahren zur Unterstützung eines Fahrers eines Fahrzeugs bei einem Parkvorgang offenbart, bei dem das Fahrzeug, nachdem es der Fahrer verlassen hat, selbstständig eine geeignete Abstellfläche sucht und dort einparkt und/oder, wenn der Fahrer das Fahrzeug benötigt, selbstständig von der Abstellfläche ausparkt und den Fahrer selbstständig an einer bestimmten Stelle abholt.

Aus der DE 10 2016 001 264 A1 ist ein Verfahren zum autonomen Fahren eines Fahrzeugs in einem begrenzten Gebiet bekannt, wobei ein fahrzeugeigenes, zum autonomen Fahren genutztes Steuergerät über eine Fahrzeugschnittstelle von einer externen Steuereinrichtung gesteuert wird. Dabei überprüft das eigene, zum autonomen Fahren genutzte Steuergerät, ob sich das Fahrzeug in einem von einer als lokale Infrastruktursteuereinheit ausgebildeten externen Steuereinrichtung vorgegebenen begrenzten Gebiet befindet. Durch das fahrzeugeigene Steuergerät wird nach Feststellung einer Position des Fahrzeugs in dem vorgegebenen begrenzten Gebiet über eine Fernsteuerungsschnittstelle des Fahrzeugs eine drahtlose Verbindung zur lokalen Infrastruktursteuereinheit zur Steuerung des autonomen Fahrvorgangs hergestellt, und das Fahrzeug durch die lokale Infrastruktursteuereinheit ferngesteuert.

Aus der DE 10 2016 211179 A1 ist ein Betreiben eines Parkassistenzsystems bekannt, bei dem eine Parktrajektorie eines Kraftfahrzeugs zwischen einer Ausgangsposition und einer Parkposition erlernt wird, überprüft wird, ob die erlernte Parktrajektorie über öffentlichen oder privaten Grund verläuft, und ein fahrerloses Parken ausschließlich über privaten Grund erfolgt.

Es stellt sich somit die Aufgabe, die Sicherheit bei einem durch eine Parkassistenzeinrichtung unterstützten oder durchgeführten Parkvorgang, einem Einpark- oder einem Ausparkvorgang, zu erhöhen.

Diese Aufgabe wird durch die Gegenstände der unabhängigen Patentansprüche gelöst.

Vorteilhafte Ausführungsformen ergeben sich aus den abhängigen Patentansprüchen, der Beschreibung und den Figuren.

Die Erfindung betrifft ein Verfahren zum Betreiben einer Parkassistenzeinrichtung eines Kraftfahrzeugs mit einer Reihe von Verfahrensschritten nach Anspruch 1. Ein Verfahrensschritt ist hier ein

Erlernen einer Parktrajektorie zwischen einer Ausgangsposition und einer Parkposition des Kraftfahrzeugs durch eine Recheneinheit der Parkassistenzeinrichtung bei einem von einem Fahrer des Kraftfahrzeugs geführten Parken. Das Parken kann hier ein Ein- und/oder ein Ausparken umfassen. Beispielsweise kann hier die Ausgangsposition durch eine Nutzereingabe des Fahrers erkannt werden, beispielsweise wenn dieser einen Lernmodus der Parkassistenzeinrichtung zum Erlernen der Parktrajektorie aktiviert. Die Ausgangsposition kann aber beispielsweise auch durch eine Länge der Parktrajektorie ausgehend von einer Parkposition nachträglich bestimmt werden. Die Parktrajektorie kann dabei beispielsweise wie in bekannten Verfahren beschrieben erlernt werden.

Wichtig ist hier, dass als weiterer Verfahrensschritt durch die Recheneinheit ein Überprüfen stattfindet, ob die erlernte Parktrajektorie in zumindest einem jeweiligen Abschnitt, also einem oder mehreren jeweiligen Abschnitten, über einen öffentlichen oder einen privaten Grund verläuft. Die erlernte Parktrajektorie kann also bei dem Überprüfen in unterschiedliche Abschnitte unterteilt werden, welche jeweils vollständig über einen öffentlichen Grund oder über einen privaten Grund verlaufen. Die entsprechenden Abschnitte können dabei beispielsweise als öffentliche Abschnitte und private Abschnitte bezeichnet werden. Ein weiterer Verfahrensschritt ist dabei ein durch die Recheneinheit gesteuertes fahrerloses Parken des Kraftfahrzeugs entlang der Parktrajektorie ausschließlich in einem Abschnitt der überprüften Parktrajektorie, welche über privaten Grund verläuft. Das fahrerlose Parken erfolgt somit ausschließlich in den privaten Abschnitten oder dem privaten Abschnitt. Unter einem fahrerlosen Parken des Kraftfahrzeugs kann hier ein Parken des Kraftfahrzeugs, bei welchem der Fahrer nicht in dem Kraftfahrzeug sich befindet, verstanden werden. Unter einem fahrerlosen Parken wird ein automatisiertes Parken nach dem SAE Automation Level 3 oder größer verstanden. Grundsätzlich kann der Fahrer dabei auch in dem Fahrzeug anwesend sein, entscheidend ist, dass bei dem fahrerlosen Parken der Fahrer keine Steuerfunktion für das Kraftfahrzeug übernimmt. Es wird somit ausschließlich bei dem Überfahren von privatem Grund, den privaten Abschnitten ein vollautomatisiertes Parken ermöglicht.

Die öffentlichen Abschnitte der Parktrajektorie können dabei in einer Alternative des erfindungsgemäßen Verfahrens aus der Parktrajektorie gelöscht werden, sodass künftig die Parktrajektorie zwischen einer dann aktualisierten Ausgangsposition und einer Parkposition vollständig über privatem Grund verläuft. In einer weiteren Alternative des erfindungsgemäßen Verfahrens ist es auch möglich, dass für die öffentlichen Abschnitte der überprüften Parktrajektorie lediglich ein teilautomatisiertes Parken, also eine Unterstützung des Fahrers durch die Parkassistenzeinrichtung mit dem SAE Automation Level 2 oder geringer, erfolgt.

Das hat den Vorteil, dass zum einen ein fahrerloses Fahren des Kraftfahrzeugs auf öffentlichem Grund, beispielsweise auf einer öffentlichen Straße, vermieden wird, welches in Abhängigkeit der jeweiligen Jurisdiktion möglicherweise nicht legal ist. In diesem Fall erspart das vorgeschlagene Verfahren dem Fahrer oder Eigentümer des Kraftfahrzeugs juristische Probleme. Zusätzlich ist im Allgemeinen bei einem fahrerlosen Parken des Kraftfahrzeugs die Geschwindigkeit des Kraftfahrzeugs sehr reduziert, was andere Teilnehmer im öffentlichen Straßenverkehr irritieren und entsprechend einen Stau oder sogar einen Unfall verursachen kann. Dies wird durch das vorgeschlagene System vermieden, sodass die Sicherheit im Straßenverkehr erhöht wird. Dies ist sowohl bei einem Einparken als auch einem Ausparken vorteilhaft.

In einer vorteilhaften Ausführungsform kann dabei vorgesehen sein, dass bei dem Überprüfen anhand einer Karteninformation einer Navigationseinheit der Parkassistenzeinrichtung und/oder einer Umgebungsinformation einer Umgebungssensoreinheit der Parkassistenzeinrichtung, insbesondere einer Kamerainformation einer Kameraeinheit, und/oder einer Positionsinformation einer Positionserfassungseinheit der Parkassistenzeinrichtung und/oder einer Nutzereingabe einer Eingabeeinheit der Parkassistenzeinrichtung erkannt wird, ob die Parktrajektorie in dem jeweiligen Abschnitt über öffentlichen oder privaten Grund verläuft. Die Positionserfassungseinheit kann beispielsweise ein Global Positioning System-Modul (GPS-Modul) oder ein ähnliches Modul umfassen. Die Kamerainformation kann zum Erkennen von privatem oder öffentlichem Grund genutzt werden, indem beispielsweise eine vorgegebene Straßenmarkierung, die im Allgemeinen auf öffentlichen, nicht aber auf privaten Straßen vorhanden ist, erkannt wird. Auch kann beispielsweise über ein Erkennen von einer Einfahrt oder eines Tores ein privater Grund als solcher erkannt werden.

Besonders vorteilhaft ist eine jeweilige Kombination der unterschiedlichen Informationen bei dem Überprüfen. Beispielsweise sind zwar Straßenmarkierungen typischerweise nicht auf Privatwegen von einzeln stehenden Häusern vorhanden, in privaten Wohnkomplexen jedoch schon. Hier kann eine Positionsinformation helfen, eine erkannte Straßenmarkierung dennoch einem privaten Grund zuzuordnen. Überdies kann beispielsweise aus einer Kombination von der Positionsinformation mit einer Karteninformation verbessert abgeschätzt werden, ob eine augenblickliche Position des Kraftfahrzeugs und damit ein entsprechender Abschnitt der Parktrajektorie auf einem öffentlichen Grund liegt oder über diesen verläuft oder nicht. Dies ist im Allgemeinen in der Karteninformation enthalten. Die Parktrajektorie kann also mit der Karteninformation abgeglichen werden, sodass die Parktrajektorie mit den globalen, in der Karte hinterlegten Informationen verknüpft werden kann. Dabei kann die Positionsinformation eines GPS-Moduls mit einer Positionsinformation, beispielsweise einer Odometrieinformation, von fahrzeuginternen Modulen kombiniert werden, um eine noch genauere Parktrajektorie zu bestimmen.

Das Überprüfen der Parktrajektorie hinsichtlich privaten oder öffentlichen Grunds kann auch durch eine Nutzereingabe verbessert oder vorgenommen werden. So kann beispielsweise eine Nutzereingabe einen privaten oder öffentlichen Grund definieren oder das Ergebnis des Überprüfens bestätigen. Dabei kann eine Nutzereingabe auch während des Erlernens vorgesehen sein, sodass bereits bei dem Erlernen der Parktrajektorie diese als über privaten oder öffentlichen Grund verlaufend markiert wird.

Das hat den Vorteil, dass besonders zuverlässig erkannt werden kann, ob die Parktrajektorie in dem jeweiligen Abschnitt über öffentlichem oder privatem Grund verläuft.

Insbesondere kann hier auch vorgesehen sein, dass bei dem Überprüfen aus der Umgebungsinformation durch die Recheneinheit für den jeweiligen Abschnitt ein Verkehrsaufkommen ermittelt wird und ein Abschnitt als über öffentlichen Grund verlaufend erkannt wird, falls das für den Abschnitt ermittelte Verkehrsaufkommen größer ist, als ein vorgegebenes Grenz-Verkehrsaufkommen. Das Verkehrsaufkommen kann beispielsweise bestimmt werden, indem die Anzahl der dynamischen Objekte in der Umgebung für die jeweiligen Abschnitte der Trajektorien hinterlegt wird. Grundsätzlich kann hier angenommen werden, dass auf einem öffentlichen Grund mehr dynamische Objekte, das heißt andere Verkehrsteilnehmer wie insbesondere Kraftfahrzeuge, vorhanden sind als auf privatem Grund. Das hat den Vorteil, dass das Verfahren noch einmal in seiner Genauigkeit erhöht wird und überdies die eingangs erwähnte Irritation anderer Verkehrsteilnehmer verhindert werden kann.

Dabei kann bevorzugt vorgesehen sein, dass während des Erlernens in dem jeweiligen Abschnitt der Parktrajektorie das Verkehrsaufkommen ermittelt wird und das Grenzverkehrsaufkommen in Abhängigkeit des bei dem Erlernen erfassten Verkehrsaufkommens vorgegeben wird.

Das hat den Vorteil, dass die Erkennung von öffentlichem oder privatem Grund nochmals verbessert wird, da beispielsweise in Abhängigkeit einer jeweiligen Wohngegend grundsätzlich das Verkehrsaufkommen auch auf öffentlichem Grund stark variieren kann.

Für das Erfassen des Verkehrsaufkommens kann jeweils auch eine entsprechende Querverkehrssensoreinheit des Parkassistenzsystems genutzt werden, welcher einem Detektieren von einen Fahrweg des Kraftfahrzeugs kreuzenden Verkehrsteilnehmern dient. Übersteigt der Querverkehr hier eine vorgegebene Menge, so kann der zugeordnete Grund als öffentlicher Grund erkannt werden.

In einer vorteilhaften Ausführungsform ist dabei vorgesehen, dass in einem Abschnitt der überprüften Parktrajektorie, welcher über öffentlichen Grund verläuft, ein von dem Fahrer überwachtes teilautonomes Parken erfolgt.

Das hat den Vorteil, dass die oben genannten Vorteile der erhöhten Sicherheit mit einem erhöhten Komfort einhergehen, da der Fahrer dennoch bereits frühzeitig zumindest einen Teil der Kontrolle über den Parkvorgang abgeben kann.

In einer weiteren vorteilhaften Ausführungsform ist vorgesehen, dass das Überprüfen bei dem Erlernen erfolgt und insbesondere dem Fahrer signalisiert wird, ob der augenblicklich befahrene Abschnitt der Parktrajektorie über einen öffentlichen oder privaten Grund verläuft. Bevorzugt kann der Fahrer dabei von der Parkassistenzeinrichtung darauf hingewiesen werden, dass der entsprechende über den öffentlichen Grund verlaufende Abschnitt der Parktrajektorie nicht für das fahrerlose Parken verwendet werden kann. Der jeweilige Abschnitt der Parktrajektorie, welcher über privaten Grund verläuft, kann dabei beibehalten werden und/oder der über öffentlichen Grund verlaufende Teil der Parktrajektorie verworfen werden. Anstelle des Verwerfens des über öffentlichen Grund verlaufenden Abschnitts der Parktrajektorie kann diese in einem Speicher hinterlegt werden. In diesem Fall kann vorgesehen sein, dass das Kraftfahrzeug nur nach einer Bestätigung durch den Fahrer auf dem öffentlichen Abschnitt der Parktrajektorie fahren darf. Entsprechend kann die Ausgangsposition der erlernten Parktrajektorie entlang dieser so lange verschoben werden, bis sie auf privatem Grund liegt oder ein Haltepunkt zu der Parktrajektorie hinzugefügt werden.

Das hat den Vorteil, dass das entsprechende Bewusstsein bei dem Fahrer über Möglichkeiten und Gefahren des unterstützten Parkens erhöht wird und damit die Sicherheit bei dem Parken weiter erhöht wird.

In einer weiteren vorteilhaften Ausführungsform ist vorgesehen, dass der Fahrer bei dem fahrerlosen Parken nicht in dem Kraftfahrzeug ist. Eine Betriebssicherheit kann hier durch eine Überwachung des fahrerlosen Parkens mit einem Totmannschalter außerhalb des Kraftfahrzeugs erhöht werden.

Das hat den Vorteil, dass Komfort und Flexibilität für den Fahrer erhöht werden.

In einer weiteren vorteilhaften Ausführungsform ist vorgesehen, dass der Fahrer das fahrerlose Parken unterbrechen kann und insbesondere bei einem Unterbrechen die augenblickliche, bei dem Unterbrechen von dem Kraftfahrzeug eingenommene Position des Kraftfahrzeugs auf der Parktrajektorie als Haltepunkt und/oder neue Endposition, das heißt Ausgangsposition oder Parkposition, der Parktrajektorie abgespeichert wird. Dabei kann die neue Endposition als zu dem privaten Grund gehörige Position abgespeichert werden. Dies kann bei einem nachfolgenden weiteren Lernvorgang für die Trajektorie berücksichtigt werden. Alternativ oder ergänzend kann die Ausgangsposition der Parktrajektorie auch selbsttätig von der Parkassistenzeinrichtung entlang der Parktrajektorie so lange verschoben werden, bis die Parktrajektorie vollständig über privaten Grund verläuft.

Das hat den Vorteil, dass die Sicherheit weiter erhöht wird und ein unerwünschtes fahrerloses Einfahren auf öffentlichen Grund in einer augenblicklichen Situation, jedoch mit Wirkung für künftige Situationen, durch den Fahrer unterbunden werden kann.

In einer weiteren vorteilhaften Ausführungsform ist vorgesehen, dass der öffentliche Grund einen öffentlichen Fahrweg umfasst und insbesondere der private Grund einen privaten Fahrweg umfasst. In beiden Fällen kann ein Fahrweg bevorzugt eine Straße und/oder einen Parkplatz umfassen.

In diesem Fall ist das Einschränken des fahrerlosen Parkens auf den privaten Grund besonders vorteilhaft, da auf einem öffentlichen Fahrweg, insbesondere auf Straßen oder Parkplätzen, mit viel Verkehr zu rechnen ist und somit durch das fahrerlose Parken andere Verkehrsteilnehmer irritiert und gefährdet werden können.

Die Erfindung betrifft auch eine Parkassistenzeinrichtung für ein Kraftfahrzeug, mit einer Recheneinheit zum Erlernen einer Parktrajektorie zwischen einer Ausgangsposition und einer Parkposition des Kraftfahrzeugs bei einem von einem Fahrer des Kraftfahrzeugs geführten Parken nach Anspruch 10.

Wichtig ist dabei, dass die Recheneinheit ausgebildet ist zu überprüfen, ob die erlernte Parktrajektorie in zumindest einem jeweiligen Abschnitt über einen öffentliche oder über einen privaten Grund verläuft, und ein fahrerloses Parken des Kraftfahrzeugs entlang der Parktrajektorie ausschließlich in einem Abschnitt der überprüften Parktrajektorie freizugeben und/oder durchzuführen, welcher über privaten Grund verläuft.

Vorteile und vorteilhafte Ausführungsformen der Parkassistenzeinrichtung entsprechen hier Vorteilen und vorteilhaften Ausführungsformen des beschriebenen Verfahrens.

Die Erfindung betrifft auch ein Kraftfahrzeug mit einer solchen Parkassistenzeinrichtung.

Ausführungsbeispiele der Erfindung werden nachfolgend anhand schematischer Zeichnungen näher erläutert. Dabei zeigen:
- Fig. 1: ein Kraftfahrzeug mit einer beispielhaften Ausführungsform einer Parkassistenzeinrichtung in einem ersten Beispielsszenario; und
- Fig. 2: das Kraftfahrzeug aus Fig. 1 in einem zweiten beispielhaften Szenario.

In den Figuren werden gleiche oder funktionsgleiche Elemente mit den gleichen Bezugszeichen versehen.

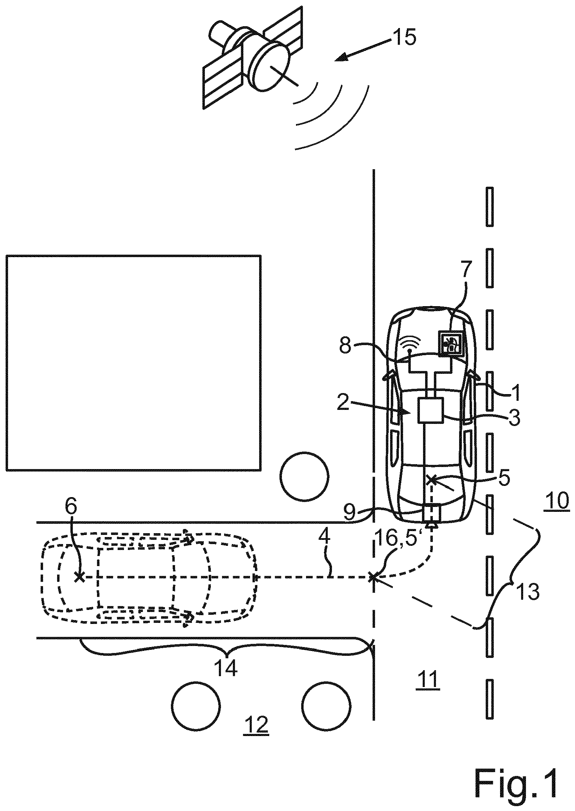

In Fig. 1 ist ein Kraftfahrzeug 1 mit einer beispielhaften Ausführungsform einer Parkassistenzeinrichtung 2 dargestellt. Die Parkassistenzeinrichtung 2 weist dabei vorliegend eine Recheneinheit 3 zum Erlernen einer Parktrajektorie 4 zwischen einer Ausgangsposition 5 und einer Parkposition 6 des Kraftfahrzeugs 1 bei einem von einem Fahrer des Kraftfahrzeugs 1 geführten Parken auf. Zusätzlich weist die Parkassistenzeinrichtung 2 hier noch eine Navigationseinheit 7 zum Bereitstellen einer Karteninformation an die Recheneinheit 3 sowie in diesem Beispiel auch eine einem globalen Positionsbestimmungssystem 15 zugeordnete Positionserfassungseinheit 8 zum Bereitstellen einer Positionsinformation des Kraftfahrzeugs 1 an die Recheneinheit 3. Schließlich weist die Parkassistenzeinrichtung 2 hier noch eine Umgebungssensoreinheit 9 auf, welche vorliegend als Kamera ausgeführt ist und somit eine Umgebungsinformation über eine Umgebung 10 des Kraftfahrzeugs 1 in Form einer Kamerainformation an die Recheneinheit 3 bereitstellt.

Vorliegend wurde nun die Parktrajektorie 4 bereits in einem vorhergehenden Parken des Kraftfahrzeugs 1, welches ein Fahrer durchgeführt hat, zwischen der Ausgangsposition 5 und der Parkposition 6 erlernt. Die Trajektorie verläuft dabei im gezeigten Beispiel teilweise über öffentlichen Grund 11, vorliegend eine öffentliche Straße, sowie einen privaten Grund 12, vorliegend eine Privatstraße in Form einer Einfahrt. Der Fahrer möchte nun im gezeigten beispielhaften Szenario an der Ausgangsposition 5 einen automatischen Parkvorgang, ein fahrerloses Parken des Kraftfahrzeugs 1, entlang der Parktrajektorie 4 auslösen. Dabei oder bereits bei dem Erlernen der Parktrajektorie 4 wird durch die Recheneinheit 3 vorliegend anhand der bereitgestellten Informationen, nämlich hier der Karteninformation und der Umgebungsinformation, der Kamerainformation sowie der Positionsinformation, erkannt, ob die Parktrajektorie 4 in jeweiligen Abschnitten 13, 14 über öffentlichen Grund 11 oder privaten Grund 12 verläuft. Vorliegend verläuft die Parktrajektorie 4 in einem ersten Abschnitt 13, einem öffentlichen Abschnitt 13, über den öffentlichen Grund 11 und in einem zweiten Abschnitt 14, einem privaten Abschnitt 14, über privaten Grund 12.

Entsprechend wird die Recheneinheit der Parkassistenzeinrichtung 2 und somit die Parkassistenzeinrichtung 2 selber das fahrerlose Parken ausgehend von der Ausgangsposition 5 nicht zulassen oder durchführen, sondern beispielsweise vorliegend den Fahrer darauf hinweisen, dass die entsprechende Funktion noch nicht aktiviert werden kann und er beispielsweise in einem teilunterstützten Fahrmodus bis zum Erreichen des privaten Abschnitts 14 noch eine Kontrolle über das Kraftfahrzeug 1 beibehalten muss. So kann der Fahrer beispielsweise bis zu einer weiteren Position 16 das Kraftfahrzeug in dem Parkvorgang steuern und sodann das Kraftfahrzeug 1 fahrerlos entlang der Parktrajektorie 4 von der weiteren Position 16 in dem privaten Abschnitt 14 fahrerlos parken lassen.

Dabei kann beispielsweise die neue Position 16 als neue Ausgangsposition 5' festgelegt werden. Dann ist beispielsweise naturgemäß nur von dieser neuen Ausgangsposition 5' das assistierte Parken möglich.

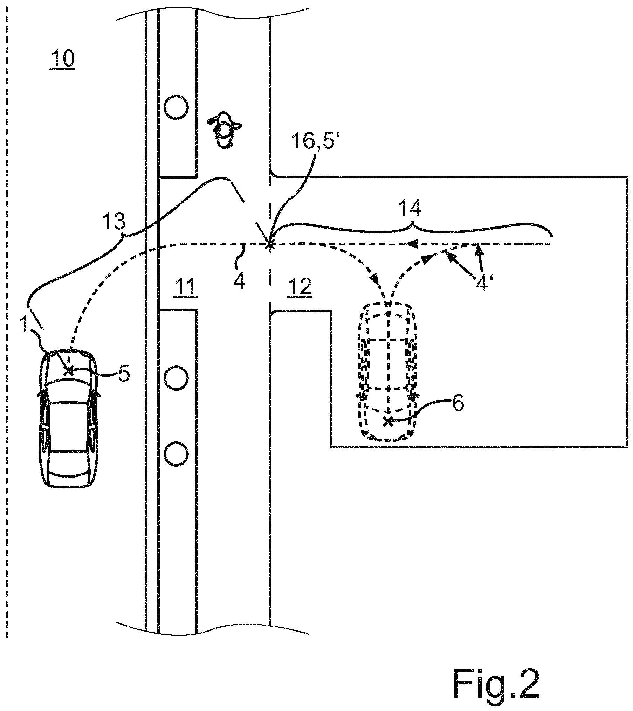

In Fig. 2 ist das Kraftfahrzeug 1 aus Fig. 1 in einem weiteren beispielhaften Szenario dargestellt. Aus Gründen der Übersichtlichkeit ist die Parkassistenzeinrichtung 2 (Fig. 1) dabei nicht dargestellt. Vorliegend verläuft die Parktrajektorie 4 von der Ausgangsposition 5 zu der Parkposition 6 von einer Straße als öffentlicher Grund 11 über einen Bürgersteig auf einen privaten Parkplatz 12 als privater Grund. Die Parktrajektorie 4 umfasst dabei auch eine gleichwertige Ersatztrajektorie als ergänzende Parktrajektorie 4', welche von der ursprünglichen Parktrajektorie 4, welche bei dem Einparken des Kraftfahrzeugs 1 aus der Ausgangsposition 5 in die Parkposition 6 erlernt wird, abweicht. Die ergänzende Parktrajektorie 4' kommt durch ein fahrerloses Rangieren auf den privaten Grund 12 zustande, bei welchem das Kraftfahrzeug 1 bei einem Ausparken aus der Ausgangsposition 6 gewendet wird, sodass das Kraftfahrzeug 1 bei einem Verlassen des privaten Abschnitts 13 umgekehrt zu der Orientierung des Kraftfahrzeugs 1 bei dem Einparken orientiert ist.

Mit dem vorgeschlagenen Verfahren wird hier sichergestellt, dass bei einem fahrerlosen Ausparken aus der Parkposition 6 nicht fahrerlos in den öffentlichen Grund 11 eingefahren wird. Beispielsweise kann hier an der weiteren Position 16, bei welcher die Parktrajektorie 4 in den öffentlichen Abschnitt 14 übergeht, ein automatisches Anhalten des Kraftfahrzeugs 1 vorgesehen sein, sodass das Kraftfahrzeug 1 bei dem Ausparken nicht fahrerlos in den möglicherweise belebten öffentlichen Grund einfährt.

## Patentansprüche

1. Verfahren zum Betreiben einer Parkassistenzeinrichtung (2) eines Kraftfahrzeugs (1), mit den Verfahrensschritten:
a) Erlernen einer Parktrajektorie (4) zwischen einer Ausgangsposition (5) und einer Parkposition (6) des Kraftfahrzeugs (1) durch eine Recheneinheit (3) der Parkassistenzeinrichtung (2) bei einem von einem Fahrer des Kraftfahrzeugs (1) geführten Parken;
b) Überprüfen, ob die erlernte Parktrajektorie (4) in zumindest einem jeweiligen Abschnitt (13, 14) über einen öffentlichen Grund (11) oder über einen privaten Grund (12) verläuft;
c) Fahrerloses Parken des Kraftfahrzeug (1) entlang der Parktrajektorie (4) ausschließlich in einem Abschnitt (14) der überprüften Parktrajektorie (4), welcher über privaten Grund (12) verläuft, **dadurch gekennzeichnet,**
**dass** die öffentlichen Abschnitte (13, 14) der Parktrajektorie (4) aus der Parktrajektorie (4) gelöscht werden, sodass künftig die Parktrajektorie (4) zwischen einer dann aktualisierten Ausgangsposition (5') und einer Parkposition (6) vollständig über den privaten Grund (12) verläuft, oder
**dass** für die öffentlichen Abschnitte (13, 14) der überprüften Parktrajektorie lediglich ein teilautomatisiertes Parken erfolgt, bei dem eine Unterstützung des Fahrers durch die Parkassistenzeinrichtung (2) mit dem SAE Automation Level 2 oder geringer erfolgt, und das fahrerlose Parken mit dem SAE Automation Level 3 oder größer erfolgt.

2. Verfahren nach Anspruch 1,
**dadurch gekennzeichnet, dass**
bei dem Überprüfen anhand einer Karteninformation einer Navigationseinheit (7) und/oder einer Umgebungsinformation einer Umgebungssensoreinheit (9), insbesondere einer Kamerainformation einer Kameraeinheit, und/oder einer Positionsinformation einer Positionserfassungseinheit (8) und/oder einer Nutzereingabe einer Eingabeeinheit erkannt wird, ob die Parktrajektorie (4) in dem jeweiligen Abschnitt (13, 14) über öffentlichen oder privaten Grund (11, 12) verläuft.

3. Verfahren nach Anspruch 2,
**dadurch gekennzeichnet, dass**
bei dem Überprüfen aus der Umgebungsinformation durch die Recheneinheit (3) für den jeweiligen Abschnitt (13, 14) ein Verkehrsaufkommen ermittelt wird und ein Abschnitt (13, 14) als über öffentlichen Grund (11) verlaufend erkannt wird, falls das Verkehrsaufkommen größer ist als ein vorgegebenes Grenz-Verkehrsaufkommen.

4. Verfahren nach Anspruch 3,
**dadurch gekennzeichnet, dass**
während des Erlernens in dem jeweiligen Abschnitt (13, 14) der Parktrajektorie (4) das Verkehrsaufkommen ermittelt wird und das Grenz-Verkehrsaufkommen in Abhängigkeit des bei dem Erlernen erfassten Verkehrsaufkommens vorgegeben wird.

5. Verfahren nach einem der vorhergehenden Ansprüche,
**dadurch gekennzeichnet, dass**
in einem Abschnitt (13) der überprüften Parktrajektorie (4), welcher über öffentlichen Grund (11) verläuft, ein von dem Fahrer überwachtes teilautonomes Parken erfolgt.

6. Verfahren nach einem der vorhergehenden Ansprüche,
**dadurch gekennzeichnet, dass**
das Überprüfen bei dem Erlernen erfolgt und insbesondere dem Fahrer signalisiert wird, ob der augenblicklich befahrene Abschnitt (13, 14) der Parktrajektorie (4) über öffentlichen oder privaten Grund (11, 12) verläuft.

7. Verfahren nach einem der vorhergehenden Ansprüche,
**dadurch gekennzeichnet, dass**
der Fahrer bei dem fahrerlosen Parken nicht in dem Kraftfahrzeug (1) ist.

8. Verfahren nach einem der vorhergehenden Ansprüche,
**dadurch gekennzeichnet, dass**
der Fahrer das fahrerlose Parken unterbrechen kann und insbesondere bei einem Unterbrechen die augenblickliche Position des Kraftfahrzeugs (1) auf der Parktrajektorie (4) als neue Endposition (5') der Parktrajektorie (4) abgespeichert wird.

9. Verfahren nach einem der vorhergehenden Ansprüche,
**dadurch gekennzeichnet, dass**
der öffentliche Grund (11 einen öffentlichen Fahrweg, insbesondere eine Straße und/oder einen Parkplatz, umfasst und insbesondere der private Grund (12) einen privaten Fahrweg.

10. Parkassistenzeinrichtung (2) für ein Kraftfahrzeug (1), mit
- einer Recheneinheit (3) zum Erlernen einer Parktrajektorie (4) zwischen einer Ausgangsposition (5) und einer Parkposition (6) des Kraftfahrzeugs (1) bei einem von einem Fahrer des Kraftfahrzeugs (1) geführten Parken;
wobei
die Recheneinheit (3) ausgebildet ist, zu überprüfen, ob die erlernte Parktrajektorie (4) in zumindest einem jeweiligen Abschnitt (13, 14) über einen öffentlichen Grund (11) oder über einen privaten Grund (12) verläuft, und ein fahrerloses Parken des Kraftfahrzeugs (1) entlang der Parktrajektorie (4) ausschließlich in einem Abschnitt (14) der überprüften Parktrajektorie (4) freizugeben, welcher über privaten Grund (12) verläuft, **dadurch gekennzeichnet, dass** die Recheneinheit (3) weiter ausgebildet ist,
die öffentlichen Abschnitte (13, 14) der Parktrajektorie (4) aus der Parktrajektorie (4) zu löschen, sodass künftig die Parktrajektorie (4) zwischen einer dann aktualisierten Ausgangsposition (5') und einer Parkposition (6) vollständig über den privaten Grund (12) verläuft, oder
für die öffentlichen Abschnitte (13, 14) der überprüften Parktrajektorie lediglich ein teilautomatisiertes Parken bereitzustellen, bei dem eine Unterstützung des Fahrers durch die Parkassistenzeinrichtung (2) mit dem SAE Automation Level 2 oder geringer erfolgt, und das fahrerlose Parken mit dem SAE Automation Level 3 oder größer breitzustellen.

11. Kraftfahrzeug (1) mit einer Parkassistenzeinrichtung (2) nach Anspruch 10.

## Claims

1. Method for operating a parking assistance device (2) of a motor vehicle (1), comprising the method steps of:
a) learning a parking trajectory (4) between an initial position (5) and a parked position (6) of the motor vehicle (1) by means of a computing unit (3) of the parking assistance device (2) in the case of parking which is controlled by a driver of the motor vehicle (1);
b) checking whether the learnt parking trajectory (4) runs over public land (11) or over private land (12) in at least one respective section (13, 14);
c) driverless parking of the motor vehicle (1) along the parking trajectory (4) exclusively in a section (14) of the checked parking trajectory (4) which runs over private land (12), **characterized**
**in that** the public sections (13, 14) of the parking trajectory (4) are deleted from the parking trajectory (4) so that in future the parking trajectory (4) between a then updated initial position (5') and a parked position (6) runs completely over private land (12), or in that only partially automated parking, in which assistance for the driver by the parking assistance device (2) is carried out with SAE Automation Level 2 or lower, is carried out for the public sections (13, 14) of the checked parking trajectory, and the driverless parking is carried out with SAE Automation Level 3 or higher.

2. Method according to Claim 1,
**characterized in that**
during the checking on the basis of map information of a navigation unit (7) and/or on the basis of surroundings information of a surroundings sensor unit (9), in particular camera information of a camera unit and/or position information of a position-detection unit (8) and/or a user input of an input unit, it is detected whether the parking trajectory (4) runs over public or private land (11, 12) in the respective section (13, 14).

3. Method according to Claim 2,
**characterized in that**
during the checking the computing unit (3) determines from the surroundings information a traffic volume for the respective section (13, 14), and a section (13, 14) is detected as running over public land (11) if the traffic volume is higher than a predefined limit traffic volume.

4. Method according to Claim 3,
**characterized in that**
during the learning process the traffic volume in the respective section (13, 14) of the parking trajectory (4) is determined and the limit traffic volume is predefined in dependence on the traffic volume detected during the learning process.

5. Method according to one of the preceding claims,
**characterized in that**
partially autonomous parking which is monitored by the driver is carried out in a section (13) of the checked parking trajectory (4) which runs over public land (11).

6. Method according to one of the preceding claims,
**characterized in that**
the checking is carried out during the learning process, and in particular it is signalled to the driver whether that section (13, 14) of the parking trajectory (4) which is currently being travelled along runs over public or private land (11, 12).

7. Method according to one of the preceding claims,
**characterized in that**
the driver is not in the motor vehicle (1) during the driverless parking.

8. Method according to one of the preceding claims,
**characterized in that**
the driver can interrupt the driverless parking, and in particular in the event of an interruption the current position of the motor vehicle (1) on the parking trajectory (4) is stored as a new final position (5') of the parking trajectory (4).

9. Method according to one of the preceding claims,
**characterized in that**
the public land (11) comprises a public roadway, in particular a road and/or a car park, and in particular the private land (12) comprises a private roadway.

10. Parking assistance device (2) for a motor vehicle (1), having
- a computing unit (3) for learning a parking trajectory (4) between an initial position (5) and a parked position (6) of the motor vehicle (1) in the case of parking controlled by a driver of the motor vehicle (1);
wherein
the computing unit (3) is designed to check whether the trained parking trajectory (4) runs over public land (11) or over private land (12) in at least one respective section (13, 14), and to enable driverless parking of the motor vehicle (1) along the parking trajectory (4) exclusively in a section (14) of the checked parking trajectory (4) which runs over private land (12), **characterized in that** the computing unit (3) is also designed
to delete the public sections (13, 14) of the parking trajectory (4) from the parking trajectory (4) so that in future the parking trajectory (4) between a then updated initial position (5') and a parked position (6) runs completely over private land (12), or
to provide only partially automated parking, in which assistance for the driver by the parking assistance device (2) is carried out with SAE Automation Level 2 or lower, for the public sections (13, 14) of the checked parking trajectory, and to provide the driverless parking with SAE Automation Level 3 or higher.

11. Motor vehicle (1) with a parking assistance device (2) according to Claim 10.

## Revendications

1. Procédé permettant de faire fonctionner un dispositif d'aide au stationnement (2) d'un véhicule automobile (1), comprenant les étapes de procédé consistant à :
a) apprendre une trajectoire de stationnement (4) entre une position de départ (5) et une position de stationnement (6) du véhicule automobile (1) à l'aide d'une unité de calcul (3) du dispositif d'aide au stationnement (2) lors d'un stationnement guidé par un conducteur du véhicule automobile (1) ;
b) vérifier si la trajectoire de stationnement (4) apprise passe dans au moins une section (13, 14) respective par un terrain public (11) ou par un terrain privé (12) ;
c) effectuer un stationnement sans conducteur du véhicule automobile (1) le long de la trajectoire de stationnement (4) uniquement dans une section (14) de la trajectoire de stationnement (4) vérifiée qui passe par un terrain privé (12), **caractérisé**
**en ce que** les sections publiques (13, 14) de la trajectoire de stationnement (4) sont supprimées de la trajectoire de stationnement (4) de sorte qu'à l'avenir la trajectoire de stationnement (4) entre une position de départ alors mise à jour (5') et une position de stationnement (6) passera entièrement par le terrain privé (12), ou
**en ce que** pour les sections publiques (13, 14) de la trajectoire de stationnement vérifiée, seul un stationnement semi-automatique est effectué dans lequel une assistance au conducteur par le dispositif d'aide au stationnement (2) est effectuée avec le niveau d'automatisation SAE 2 ou inférieur, et le stationnement sans conducteur est effectué avec le niveau d'automatisation SAE 3 ou supérieur.

2. Procédé selon la revendication 1,
**caractérisé en ce que**
lors de la vérification, il est détecté à l'aide d'une information cartographique d'une unité de navigation (7) et/ou d'une information d'environnement d'une unité de capteur d'environnement (9), en particulier d'une information de caméra d'une unité de caméra, et/ou d'une information de position d'une unité de détection de position (8) et/ou d'une entrée utilisateur d'une unité d'entrée, si la trajectoire de stationnement (4) passe dans la section (13, 14) respective par un terrain public ou privé (11, 12).

3. Procédé selon la revendication 2,
**caractérisé en ce que**
lors de la vérification, l'unité de calcul (3) détermine à partir de l'information d'environnement pour la section (13, 14) respective un volume de trafic et identifie une section (13, 14) comme passant par un terrain public (11) si le volume de trafic est supérieur à un volume de trafic limite prédéfini.

4. Procédé selon la revendication 3,
**caractérisé en ce que**
pendant l'apprentissage, le volume de trafic est déterminé dans la section (13, 14) respective de la trajectoire de stationnement (4), et le volume de trafic limite est prédéfini en fonction du volume de trafic détecté lors de l'apprentissage.

5. Procédé selon l'une quelconque des revendications précédentes,
**caractérisé en ce que**
un stationnement semi-autonome surveillé par le conducteur est effectué dans une section (13) de la trajectoire de stationnement (4) vérifiée qui passe par un terrain public (11).

6. Procédé selon l'une quelconque des revendications précédentes,
**caractérisé en ce que**
la vérification est effectuée lors de l'apprentissage, et qu'il est en particulier signalé au conducteur si la section (13, 14) parcourue instantanément de la trajectoire de stationnement (4) passe par un terrain public ou privé (11, 12).

7. Procédé selon l'une quelconque des revendications précédentes,
**caractérisé en ce que**
le conducteur ne se trouve pas dans le véhicule automobile (1) lors du stationnement sans conducteur.

8. Procédé selon l'une quelconque des revendications précédentes,
**caractérisé en ce que**
le conducteur peut interrompre le stationnement sans conducteur, et en particulier en cas d'interruption, la position instantanée du véhicule automobile (1) sur la trajectoire de stationnement (4) est sauvegardée comme une nouvelle position finale (5') de la trajectoire de stationnement (4).

9. Procédé selon l'une quelconque des revendications précédentes,
**caractérisé en ce que**
le terrain public (11) comprend une voie publique, en particulier une route et/ou un parking, et le terrain privé (12) comprend en particulier une voie privée.

10. Dispositif d'aide au stationnement (2) pour un véhicule automobile (1), comprenant
- une unité de calcul (3) pour apprendre une trajectoire de stationnement (4) entre une position de départ (5) et une position de stationnement (6) du véhicule automobile (1) lors d'un stationnement guidé par un conducteur du véhicule automobile (1) ;
dans lequel
l'unité de calcul (3) est réalisée pour vérifier si la trajectoire de stationnement (4) apprise passe dans au moins une section (13, 14) respective par un terrain public (11) ou par un terrain privé (12), et pour autoriser un stationnement sans conducteur du véhicule automobile (1) le long de la trajectoire de stationnement (4) exclusivement dans une section (14) de la trajectoire de stationnement (4) vérifiée qui passe par un terrain privé (12), **caractérisé en ce que** l'unité de calcul (3) est en outre réalisée
pour supprimer de la trajectoire de stationnement (4) les sections publiques (13, 14) de la trajectoire de stationnement (4) de sorte qu'à l'avenir la trajectoire de stationnement (4) entre une position de départ alors mise à jour (5') et une position de stationnement (6) passera entièrement par le terrain privé (12), ou
pour ne fournir qu'un stationnement semi-automatique pour les sections publiques (13, 14) de la trajectoire de stationnement vérifiée, dans lequel une assistance au conducteur par le dispositif d'aide au stationnement (2) est effectuée avec le niveau d'automatisation SAE 2 ou inférieur, et pour fournir le stationnement sans conducteur avec le niveau d'automatisation SAE 3 ou supérieur.

11. Véhicule automobile (1), comprenant un dispositif d'aide au stationnement (2) selon la revendication 10.
